# EUROPEAN PATENT APPLICATION

(11) **EP 1 711 003 A2**
(43) Date of publication of application: **11.10.2006**
(21) Application number: 06007215.4
(22) Date of filing: 05.04.2006
(51) Int. Cl.: H04N 5/00

(54) **Imaging device, sound recording device and sound recording method**

(30) Priority: 06.04.2005 JP 2005109379; 14.02.2006 JP 2006036655
(71) Applicant: SONY CORPORATION, Tokyo (JP)
(72) Inventor: Kawata, Shogo, Shinagawa-ku Tokyo (JP); Sekiguchi, Masami, Shinagawa-ku Tokyo (JP); Kotani, Yasutaka, Shinagawa-ku Tokyo (JP); Urushibara, Toshichika, Shinagawa-ku Tokyo (JP)
(74) Representative: Müller - Hoffmann & Partner

(57) **Abstract**

Provided is an imaging device which collects sound, takes an image, and records the sound and the image on a recording medium, including a sound collecting unit collecting sound signals of a plurality of channels; a wireless communication unit receiving a sound signal transmitted from an external sound collecting device by wireless; and a sound synthesis unit synthesizing the sound signal received by the wireless communication unit to at least any one of channels of the sound signals collected by the sound collecting unit.

## Description

### CROSS REFERENCES TO RELATED APPLICATIONS

The present invention contains subject matter related to Japanese Patent Application JP 2006-036655 field in the Japanese Patent Office on February 14, 2006, the entire contents of which being incorporated herein by reference.

### BACKGROUND OF THE INVENTION

### 1. Field of the Invention

The present invention relates to an imaging device for collecting sound and picking up an image and recording the image and the sound on a recording medium, and a sound record device and method for recording a collected sound signal, and more particularly, to an imaging device and a sound record device and method, which collects and records a sound signal through multiple channels.

### 2. Description of Related Art

In the related art, a video camera having an imaging function and a sound collection function and an image and sound record function is widely known. In such a video camera, sound signals of two channels including a left channel and a right channel are generally recorded and reproduced except when a monaural signal is recorded and reproduced. According to this method, since the sound signal can be clearly recorded even in a change in the position of a sound source in a horizontal direction of an imageing side of the video camera upon reproduction, the change in the position of the sound source in the horizontal direction upon the reproduction can be reproduced. However, a change in a sound field in an anteroposterior direction of a photographer may not be clearly reproduced.

Accordingly, recently, in order to improve reproducibility of presence feeling of sound, a stereoscopic sound field reproduction system for receiving a collected sound signal in a horizontal direction and an anteroposterior direction and recording and reproducing the collected sound signal through multiple channels, that is, a surround sound reproduction system, is widely known. In addition, even in a home video camera, a plurality of microphones is mounted in order to pick up a stereoscopic sound field. Although a general listener takes a picture, the stereoscopic sound field can be easily reproduced.

In the related art, as an example of an device for picking up sound through multiple channels, there is provided a video camera for recording sound signals of plural channels from a plurality of microphones and a signal obtained by processing the sound signals of all the channels to a single channel such that the sound signals are independently reproduced, thereby reproducing sound with high presence feeling (For example, see Japanese Unexamined Patent Application No. 2003-18543 ([0018] to [0028] and Fig. 2).

In addition, there is provided a multi-channel sound collecting device including four omnidirectional microphones which are disposed at front, back, left, and right sides, 8-sets of 1st-8th synthesis sections which receive outputs of the 4 omnidirectional microphones and synthesize 8 directional microphone outputs in which the directivities are set within a horizontal plane at an interval of 45°, and a 9th synthesis section which synthesizes multi-channel stereo signals from the outputs of the 8-sets of the synthesis sections such that it is possible to realize a compact and low-cost multi-channel sound collecting device only with the 4 sets of the omnidirectional microphones (see Japanese Unexamined Patent Application No. 2002-223493 ([0026] to [0041] and Fig. 1)).

### SUMMARY OF THE INVENTION

However, in the video camera capable of recording the multi-channel sound signal, when the sound of a target subject is collected in an environment that ambient sound is likely to be better heard than the sound of the target subject, it is difficult to relatively hear the sound of the target subject although the sound is reproduced by the surround sound reproduction system. In addition, when the target subject is moved, since the sound of the subject is separately recorded through the plurality of channels, auditory localization upon reproduction is obscure. Furthermore, this problem is not limited to the video camera and may be caused even in a device for recording only the sound, such as a portable recording device.

It is desirable to provide an imaging device capable of reproducing sound with high presence feeling and clearly reproducing sound of a target subject by recording a multi-channel sound signal.

Furthermore, it is further desirable to provide a sound record device capable of reproducing sound with high presence feeling and clearly reproducing sound of a target subject by recording a multi-channel sound signal.

In addition, it is further desirable to provide a sound recording method capable of reproducing sound with high presence feeling and clearly reproducing sound of a target subject by recording a multi-channel sound signal.

According to an embodiment of the present invention, there is an imaging device which collects sound, takes an image, and records the sound and the image on a recording medium, including a sound collecting unit collecting sound signals of a plurality of channels; a wireless communication unit receiving a sound signal transmitted from an external sound collecting device by wireless; and a sound synthesis unit synthesizing the sound signal received by the wireless communication unit to at least any one of channels of the sound signals collected by the sound collecting unit.

In the imaging device, the sound signals of the plurality of channels are collected by the sound collecting unit, and the sound signal which is collected and transmitted by the external collecting device by wireless is received by the wireless communication unit. The sound signal received by the wireless communication unit is synthesized to any one of the channels of the sound signals from the sound collecting unit by the sound synthesis unit. Accordingly, for example, by mounting the external sound collecting device near the subject to be picked up, the sound of the subject is synthesized to the sound signal of any channel and the synthesized signal is recorded.

According to another embodiment of the invention, there is a sound record device which records a sound signal on a recording medium, including a sound receiving unit wire-receiving sound signals of a plurality of channels; a wireless communication unit receiving a sound signal transmitted from an external sound collecting device by wireless; and a sound synthesis unit synthesizing the sound signal received by the wireless communication unit to at least any one of the channels of the sound signals received by the sound receiving unit.

In the sound record device, the sound signals of the plurality of channels are wire-received by the sound receiving unit, and the sound signal which is collected and transmitted by the external collecting device by wireless is received by the wireless communication unit. The sound signal received by the wireless communication unit is synthesized to any one of the channels of the sound signals by the sound synthesis unit. Accordingly, for example, by mounting the external sound collecting device near a specific object, the sound of the object is synthesized to the sound signal of any channel and the synthesized signal is recorded.

### BRIEF DESCRIPTION OF THE DRAWINGS

The invention will be described with reference to the accompanying drawings, wherein like numbers reference like elements, and wherein:
Fig. 1 is a view showing configurations of a sound record device and a peripheral device related to a first embodiment of the invention;
Fig. 2 shows an example of using a video camera related to a second embodiment of the invention;
Fig. 3 shows a main configuration of the video camera;
Fig. 4 is a flowchart showing a sound synthesis process in the video camera related to the second embodiment of the invention;
Fig. 5 is a flowchart showing a procedure for estimating a distance according to wave intensity data;
Fig. 6 is a flowchart showing a sound synthesis process according to a zoom factor of a lens;
Fig. 7 is a flowchart showing a procedure for synthesizing the sound according to focal length data of a lens;
Fig. 8 shows directivity of a sound signal generated by a multi-channel sound process unit;
Fig. 9 shows a main configuration of a video camera related to a third embodiment of the invention;
Fig. 10 shows allocation of an output channel when a zoom factor is in a wide-angle range;
Fig. 11 shows the allocation of the output channel when a zoom factor is in a middle range;
Fig. 12 shows the allocation of the output channel when a zoom factor is in a telescope range;
Fig. 13 shows a photographing range which is changed by a zoom operation of the video camera; and
Fig. 14 is a flowchart showing a procedure for synthesizing the sound in the video camera related to the third embodiment of the invention.

### DESCRIPTION OF PREFERRED EMBODIMENTS

Hereinafter, exemplary embodiments according to the present invention will be described with reference to the accompanying drawings.

### First Embodiment

First, a sound record device for collecting a sound signal through multi channels and recording the sound signal on a recording medium will be described.

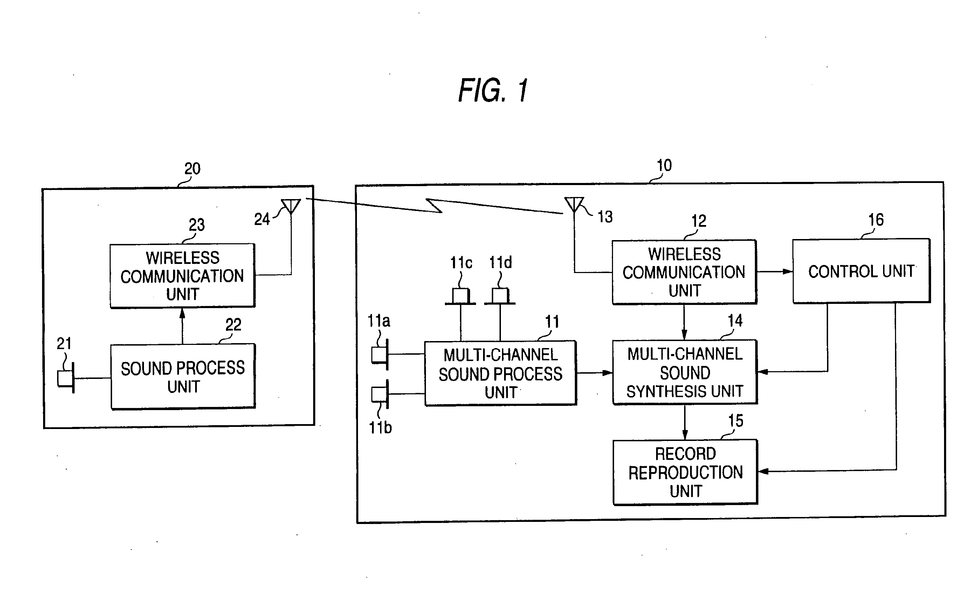

Fig. 1 is a view showing configurations of a sound record device and a peripheral device related to a first embodiment of the invention.

The sound record device 10 shown in Fig. 1 includes a function for collecting and recording multi-channel sound signals and a function for receiving and recording a sound signal which is collected and transmitted by a wireless microphone device 20 by wireless. In addition, in the following description, the sound signal collected by the wireless microphone device 20 is referred to as a wireless sound signal.

In the sound record device 10, a multi-channel sound process unit 11 converts sound signals collected by a plurality of microphones 11a to 11d into digital signals, respectively, and outputs the digital signals to a multi-channel sound synthesis unit 14. In addition, the microphones 11a to 11d may be internally mounted in or externally connected to the sound record device 10. A wireless communication unit 12 receives the sound signal (wireless sound signal) transmitted from the wireless microphone device 20 through an antenna 13 and transmits the sound signal to the multi-channel sound synthesis unit 14.

The multi-channel sound synthesis unit 14 converts the multi-channel sound signals transmitted from the multi-channel sound process unit 11 into sound signals having specific multi-channel standards, for example, so-called multi-channel sound signals of 5.1 channel including the left and right channels and a center channel of a front side and a left and right channels of a back side, and a channel of a sub-woofer. In addition, the wireless sound signal from the wireless communication unit 12 is synthesized to at least one channel (for example, the center channel) specified by a control unit 16 among the multi-channel sound signals and the synthesized sound signal is then output to a record reproduction unit 15. Furthermore, the multi-channel sound synthesis unit 14 has a function for decoding a sound signal read from a recording medium by the record reproduction unit 15.

The record reproduction unit 15 records the multi-channel sound signals output from the multi-channel sound synthesis unit 14 on a recording medium such as an optical disc or a magnetic tape. In addition, the record reproduction unit 15 can also reproduce the recorded sound signal. The control unit 16 controls the overall sound record device 10. For example, the control unit 16 controls allocation of a synthesis channel of the wireless sound signal and a synthesis ratio (0% to 100%) in the multi-channel sound synthesis unit 14 and record and reproduction operations of the record reproduction unit 15, according to manipulation of a user.

Meanwhile, in the wireless microphone device 20, the sound process unit 22 converts the sound signal collected by the microphone 21 into a digital signal. The wireless communication unit 23 wirelessly transmits the sound signal (wireless sound signal) from the sound process unit 22 through an antenna 24.

In the sound record device 10, since the multi-channel sound signal can be recorded on the recording medium, it is possible to reproduce the sound in which a sound field in all directions is reproduced, with high presence feeling.

In addition, since the wireless sound signal received by the wireless communication unit 12 can be synthesized to any channel of the multi-channel sound signal, it is possible to clearly reproduce the sound collected by the wireless microphone device 20 upon reproduction. For example, when the wireless microphone device 20 is attached to an object such as a moving person to collect the sound of the object, it is possible to clearly hear the sound of the object upon the reproduction although the sound of the object is recorded when the ambient sound of the sound record device 10 is larger than the sound of the object.

In addition, in the multi-channel sound synthesis unit 14, the wireless sound signal from the wireless microphone device 20 may be synthesized to any channel of the multi-channel sound signal with a predetermined synthesis ratio. For example, a largest wireless sound signal is synthesized to the center channel and wireless sound signals smaller than the largest wireless sound signal are synthesized to the left and right channels of the front side such that localization of the sound of the object having the wireless microphone device 20 can become more clear. In addition, the allocation of the synthesis channel or the synthesis ratio may be set, for example, by the manipulation of the user.

Furthermore, when the object is moved, the synthesis ratios of the wireless sound signals to the respective channels may be changed depending on the movement of the object. In this case, by using an omnidirectional antenna as the antenna 24 of the wireless microphone device 20 and using a directional variable antenna as the antenna 13 of the sound record device 10, it is possible to estimate an arrival direction of the wave. In other words, when a positional relationship between the object and the sound record device 10 is changed, the wireless communication unit 12 estimates the arrival direction of the wireless sound signal based on the intensity of the received wave and outputs direction information to the control unit 16 such that a channel to which the wireless sound signal will be allocated is decided and the synthesis ratio thereof is appropriately decided.

In addition, as a directional variable antenna, for example, an adaptive array antenna or a diversity antenna may be used. The adaptive array antenna includes a plurality of antennas, in which the amplitudes and the phases of the waves received through the respective antennas are controlled to change the directivity of the antennas. The control unit 16 controls the antenna 13 through the wireless communication unit 12 to detect the intensity of the wireless signal received at each angle of the directivity thereof, and estimates the arrival direction of the wave based on the detected result. In the diversity antenna, a plurality of directional antennas having respective different directivities is used.

In addition, the sound record device 10 having the above-described configuration is applicable to a portable recorder which records a sound signal on a magnetic tape or a mini disc (MD; registered trademark) or a stationary recorder which receives, synthesizes, and records a plurality of sound signals in a broadcasting station or a concert hall.

Furthermore, as a method of wirelessly communicating the sound signal between the wireless microphone device 20 and the sound record device 10, for example, Bluetooth, a wireless local area network (LAN), a FM modulation method, and an infrared ray communication method may be used.

### Second Embodiment

Next, a video camera for recording a multi-channel sound signal on a recording medium together with a picked-up image signal will be described.

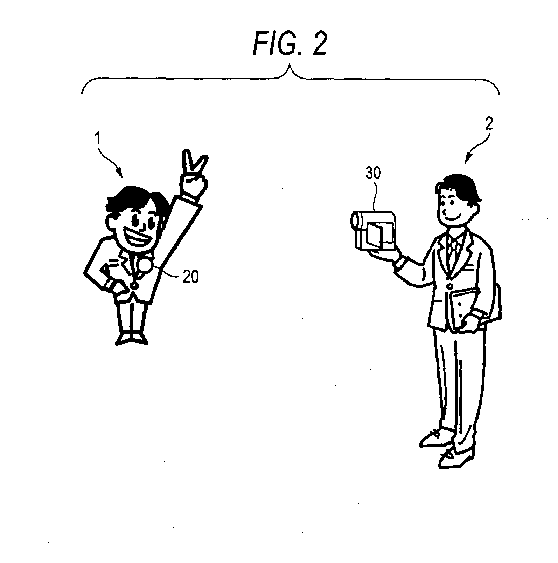

Fig. 2 shows an example of using a video camera related to a second embodiment of the invention.

A person 1, who is a subject, wears the wireless microphone device 20. In addition, the wireless sound signal transmitted from the wireless microphone device 20 is received by a video camera 30 of a photographer 2 and is synthesized to multi-channel sound signals collected by the microphones of the video camera 30 and the synthesized sound signal is recorded. To this end, when the person 1 is separated from the photographer, it is possible to clearly hear the sound of the person 1 upon the reproduction although the image is picked up and the sound signal is collected when the ambient sound is larger than the sound of the person 1.

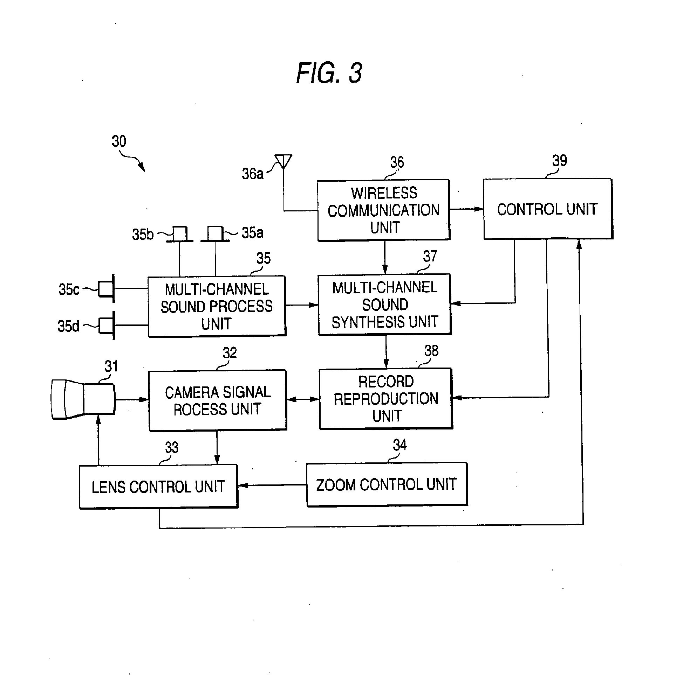

Fig. 3 shows a main configuration of the video camera.

The video camera 30 shown in Fig. 3 includes a camera block 31, a camera signal process unit 32, a lens control unit 33, a zoom control unit 34, a multi-channel sound process unit 35, a wireless communication unit 36, an antenna 36a, a multi-channel sound synthesis unit 37, a record reproduction unit 38, and a control unit 39.

In the video camera 30, the camera block 31, the camera signal process unit 32, the lens control unit 33, and the zoom control unit 34 are related to an imaging function. The camera block 31 includes a lens or a shutter for receiving incident light from a subject, an iris mechanism, and an imaging element. In addition, the camera block 31 has a zoom function.

The camera signal process unit 32 performs a digital converting process, an image quality correcting process, or a compression coding process on an image signal output from the imageing element of the camera block 31 and outputs the processed signal to the record reproduction unit 38. In addition, the camera signal process unit 32 also has a function of expansion-coding an image signal read from the recording medium by the record reproduction unit 38.

The lens control unit 33 controls an operation of the camera block 31 and has an automatic focus function which automatically takes the focus based on a picked-up image signal supplied from the camera signal process unit 32 or a function which controls a zoom factor based on a control signal from the zoom control unit 34. The zoom control unit 34 includes a function which allows an operator of the video camera 30 to select any zoom factor by the control of a zoom lever.

Meanwhile, the multi-channel sound process unit 35, the wireless communication unit 36, and the multi-channel sound synthesis unit 37 are related to a function for collecting the sound and includes functions corresponding to the multi-channel sound process unit 11, the wireless communication unit 12, and the multi-channel sound synthesis unit 14 shown in Fig. 1, respectively. In other words, the sound signals collected by microphones 35a to 35d are converted into multi-channel signals (for example, 5.1 channel signal) having specific multi-channel standards by the multi-channel sound process unit 35. In addition, the wireless sound signal from the wireless microphone device 20 is input to the wireless communication unit 36 through an antenna 36a and is synthesized to the sound signal of a predetermined channel by the multi-channel sound synthesis unit 37.

The record reproduction unit 38 multiplexes the image signal from the camera signal process unit 32 and the multi-channel sound signals from the multi-channel sound synthesis unit 37 and records the multiplexed signals on a specific record medium such as a magnetic tape or an optical disc. Furthermore, by reading and decoding the recorded signal by the camera signal process unit 32 and the multi-channel sound synthesis unit 37, the recorded signal is reproduced.

The control unit 39 controls the overall the video camera 30. For example, the control unit 39 controls allocation of synthesis channel or the synthesis ratio of the wireless sound signal of the multi-channel sound synthesis unit 37 and record and reproduction operations of the record reproduction unit 15, according to manipulation of the user. In addition, as described below, the control unit 39 also has a function for controlling a synthesis ratio of the multi-channel sound synthesis unit 37, based on a distance to the wireless microphone device 20 which is estimated from zoom factor control information and direction information of the wireless sound signal.

Next, a procedure for controlling sound synthesis performed by the video camera 30 will be described.

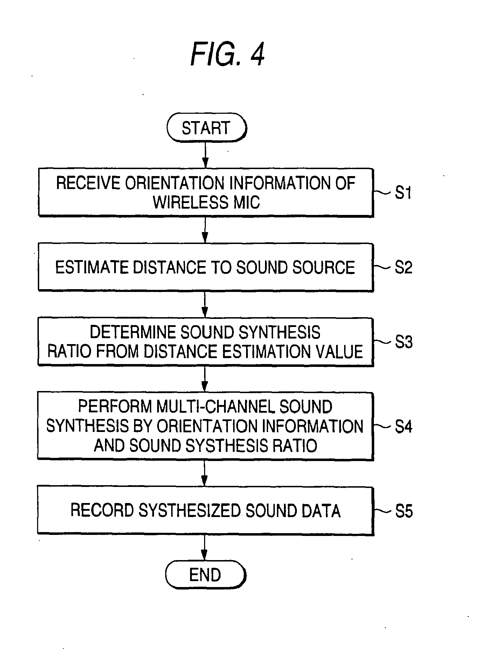

Fig. 4 is a flowchart showing a sound synthesis process in the video camera related to the second embodiment of the invention.

In step S1, the control unit 39 receives the direction information of the wireless microphone device 20 from the wireless communication unit 36.

In addition, the direction information from the wireless communication unit 36 is similar to that described in the first embodiment. In other words, the wireless communication unit 36 estimates an arrival direction of the wireless sound signal based on the intensity of the signal received through the directional variable antenna 36a, and outputs the estimated result to the control unit 39 as the direction information. Alternatively, for example, a position of the subject in a screen may be detected by an image recognizing process based on the picked-up image signal to generate the direction information based on the detected result. In this case, for example, by mounting an identification body (for example, a ribbon, a bracelet, a badge, or the like) or a light emitting body having a specific color on the subject and recognizing the identification body or the light emitting body, it is possible to increase detection precision of the direction.

In step S2, the control unit 39 estimates a distance to a sound source (that is, wireless microphone device 20) and calculates a distance estimation value.

In step S3, the control unit 39 generates sound synthesis ratio information from the calculated distance estimation value such that the volume of the sound synthesized to the sound signal collected by the multi-channel sound process unit 35 is determined.

In step S4, the control unit 39 outputs the direction information and the sound synthesis ratio information to the multi-channel sound synthesis unit 37. The multi-channel sound synthesis unit 37 synthesizes the wireless sound signal from the wireless communication unit 36 to the multi-channel sound signals, based on the sound synthesis ratio information and the synthesis ratio information between the channels based on the received direction information.

In step S5, sound signals obtained by synthesizing the wireless sound signal to the respective channels of the multi-channel sound signal with a predetermined synthesis ratio are output to the record reproduction unit 38 and are recorded on the recording medium together with the image signal.

Next, a section for estimating the distance to the sound source and generating the sound synthesis ratio information (corresponding to steps S1 to S3 of Fig. 4) will be described.

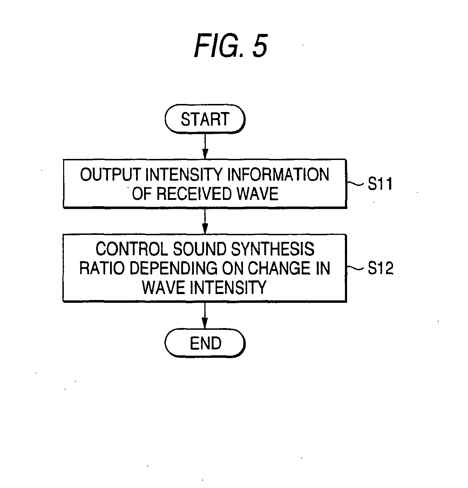

Fig. 5 is a flowchart showing a procedure for estimating a distance according to wave intensity data.

In step S11, the wireless communication unit 36 outputs wave intensity information of the received wave from the wireless microphone device 20 to the control unit 39.

In step S12, the control unit 39 controls the sound synthesis ratio depending on the intensity of the wave. When the intensity of the wave becomes stronger, the synthesis ratio of the wireless sound signal is set to be small, and, when the intensity of the wave becomes weaker, the synthesis ratio of the wireless sound signal is set to be large. Accordingly, it is possible to record the sound signal such that the wirelessly transmitted wireless sound signal has an adequate sound volume, regardless of the distance to the sound source having the wireless microphone device 20.

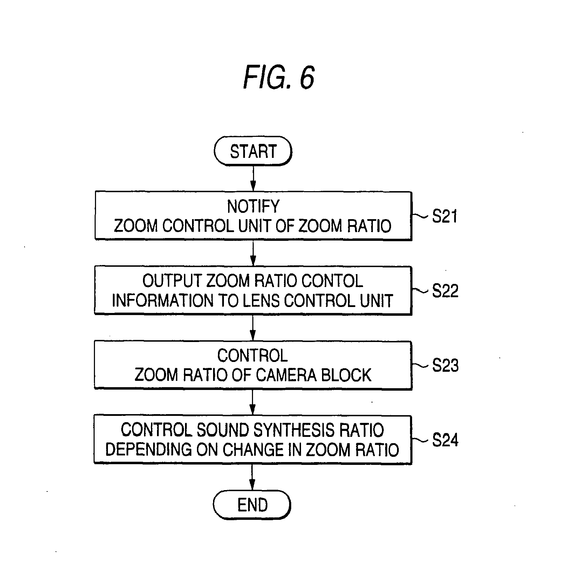

In addition, the distance may be estimated based on the zoom factor of the lens to control the sound synthesis ratio. Fig. 6 is a flowchart showing a sound synthesis process according to a zoom factor of a lens.

In step S21, the photographer controls the zoom factor using the zoom control unit 34 of the video camera 30.

In step S22, the zoom control unit 34 outputs zoom factor control information to the lens control unit 33.

In step S23, the lens control unit 33 controls the zoom factor of the camera block 31 to a predetermined value.

In step 24, the lens control unit 33 outputs the zoom factor control information to the control unit 39. The control unit 39 estimates the distance to the sound source having the wireless microphone device 20 based on the received zoom factor control information and controls the sound synthesis ratio of the multi-channel sound synthesis unit 37 based on the distance estimation information. When the zoom factor is set to be small, the synthesis ratio of the wireless sound signal is set to be small, and, when the zoom factor is set to be large, the wireless sound signal is set to be large. Accordingly, it is possible to record the sound signal such that the wirelessly transmitted wireless sound signal has an adequate sound volume, regardless of the distance to the sound source having the wireless microphone device 20. In addition, the magnification ratio of the subject increases, the sound volume of the subject also increases. Thus, presence feeling increases by synergy of the image and the sound volume.

In addition, the control unit 39 may estimate the distance to the sound source, for example, based on zoom lens position information detected by the camera block 31, instead of the zoom factor control information output from the lens control unit 33.

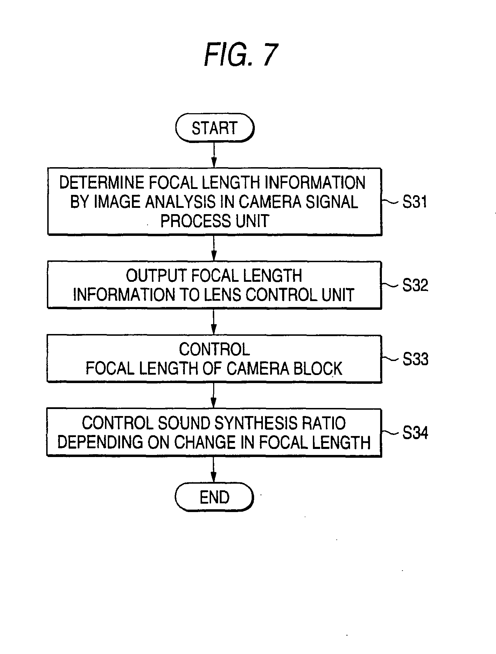

Furthermore, the distance may be estimated by the focal length data of a lens to perform the sound synthesis process. Fig. 7 is a flowchart showing the sound synthesis process according to the focal length data of a lens.

In step S31, the camera signal process unit 32 analyzes whether the image signal is focused in the camera block 31.

In step S32, the camera signal process unit 32 outputs the focal length information according to the result of analyzing the focus to the lens control unit 33.

In step S33, the lens control unit 33 controls the camera block 33 according to the input focal length information to control the focal length and outputs the focal length information to the control unit 39.

In step S34, the control unit 39 controls the sound synthesis ratio of the multi-channel sound synthesis unit 37 based on the focal length information. When the focal length is set to be short, the synthesis ratio of the wireless sound signal is set to be small, and, when the focal length is set to be long, the synthesis ratio of the wireless sound signal is set to be large. Accordingly, it is possible to record the sound signal such that the wirelessly transmitted wireless sound signal has an adequate sound volume, regardless of the distance to the sound source having the wireless microphone device 20.

As described above, in the video camera 30 of the present embodiment, since the specific subject having the wireless microphone device 20 is photographed to record the sound signal through the multiple channels together with the image signal, it is possible to clearly reproduce the sound of the subject upon the stereoscopic sound field reproduction. Thus, it is possible to obtain adequate localization of the sound and the image and reduce incongruity between the reproduction screen and the sound. In addition, by controlling the synthesis ratio or the allocation of the synthesis channel of the wireless sound signal into the respective channels according to the direction or the distance from the subject, the movement of the subject in the picked-up image and the reproduction sound can be in balance such that high-quality image/sound contents efficiently using the stereoscopic sound field can be easily prepared.

### Third Embodiment

Next, a video camera for recording multi-channel sound signals on a recording medium together with a picked-up image signal different from that of the second embodiment will be described. In the video camera related to a third embodiment, the basic configuration is similar to that of the second embodiment. The multi-channel sound process unit 35 outputs a plurality of directional sound signals and the multi-channel sound synthesis unit 37 changes the allocation of the sound signals to output channels or a synthesis ratio depending on a zoom factor. In addition, the synthesis ratio or the allocation of the sound signal (wireless sound signal) from the wireless microphone device 20 is changed depending on the zoom factor. By these operations, it is possible to record the sound with high presence feeling by the zoom operation.

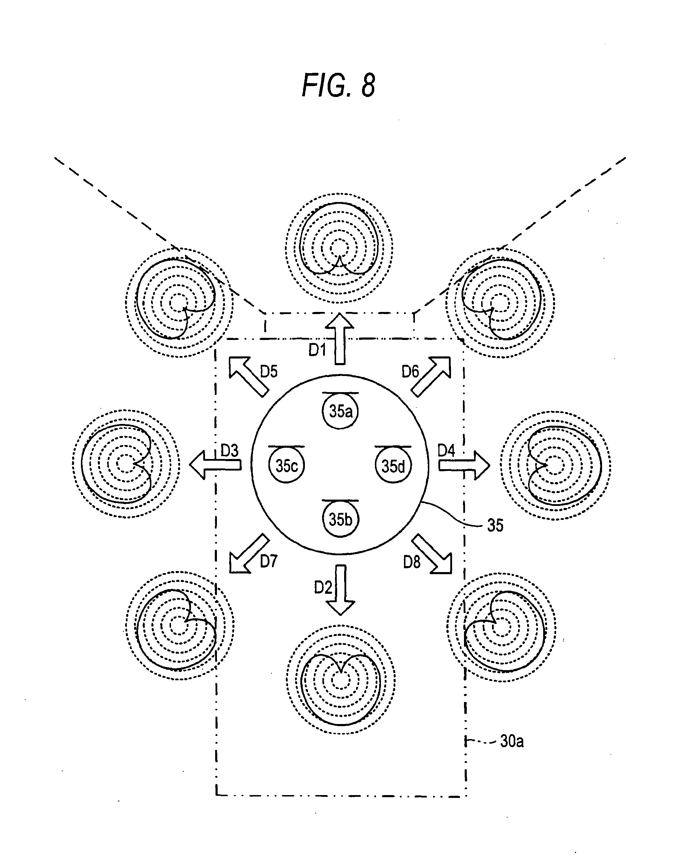

Fig. 8 shows directivity of the sound signal generated by the multi-channel sound process unit.

As shown in Fig. 8, the multi-channel sound process unit 35 of the present embodiment outputs sound signals having eight directivities of a front direction D1, a back direction D2, a left direction D3, a right direction D4, a left front direction D5, a right front direction D6, a left back direction D7, and a right back direction D8 of the video camera 30a. In addition, Fig. 8 shows polar patterns corresponding to the directivities.

These sound signals can be generated using directional microphones corresponding to D1 to D8. In addition, the sound signal may be generated by synthesizing signals collected by a plurality of directional microphones. Furthermore, as described below, the sound signal may be generated based on signals collected by a plurality of omnidirectional microphones. In the present embodiment, as shown in Fig. 8, for example, the sound signals having eight directivities is generated using four omindirectional microphones 35a to 35d.

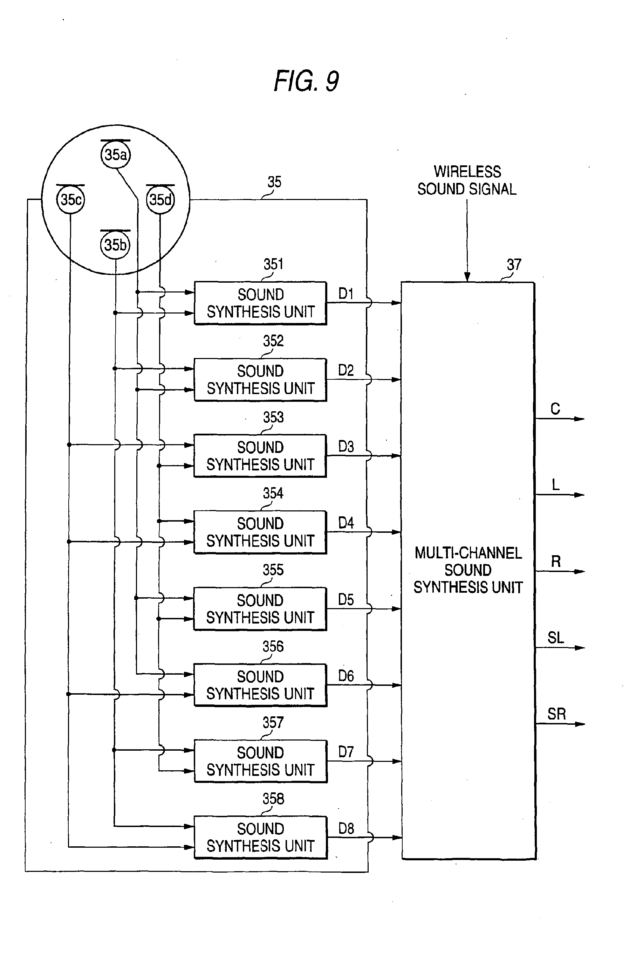

Fig. 9 shows a main configuration of a video camera related to the third embodiment of the invention.

The multi-channel sound process unit 35 receives output signals from the four omnidirectional microphones 35a to 35d and outputs the sound signals having directivities of D1 to D8 to the multi-channel sound synthesis unit 37 by sound synthesis units 351 to 358.

Each of the sound synthesis units 351 to 358 includes a delay part and subtracter and pseudo-generates an output of unidirectional microphone of a predetermined direction based on sound signals from two omnidirectional microphones. For example, the sound synthesis unit 351 receives output signals of the microphones 35a and 35b provided at the front side and the back side and delays an output of the microphone 35b using the delay part by a time when sound wave is propagated from the microphone 35b to the microphone 35a. Next, the output of the delay part is subtracted from the output of the microphone 35a by the subtracter. Accordingly, the output of a primary pressure-gradient unidirectional microphone having directivity in the front direction is obtained from the sound synthesis unit 351, as shown by the polar pattern corresponding to D1 of Fig. 8.

Similarly, the sound synthesis unit 352 synthesizes the outputs of the microphones 35a and 35b to obtain the output of the unidirectional microphone having directivity in the back direction D2. In addition, the sound synthesis unit 353 synthesizes the outputs of the microphones 35c and 35d provided at the right side and the left side to obtain the output of the unidirectional microphone having directivity in the left direction D3. Furthermore, the sound synthesis unit 354 synthesizes the outputs of the microphones 35c and 35d to obtain the output of the unidirectional microphone having the directivity in the right direction D4.

The sound synthesis unit 355 synthesizes the outputs of the microphones 35a and 35d to obtain the output of the unidirectional microphone having directivity in the left front direction D5. In addition, the sound synthesis unit 356 synthesizes the outputs of the microphones 35a and 35c to obtain the output of the unidirectional microphone having directivity in the right front direction D6. Furthermore, the sound synthesis unit 357 synthesizes the outputs of the microphones 35b and 35d to obtain the output of the unidirectional microphone having the directivity in the left back direction D7. Furthermore, the sound synthesis unit 358 synthesizes the outputs of the microphones 35b and 35c to obtain the output of the unidirectional microphone having the directivity in the right back direction D8.

In addition, the configuration of the multi-channel sound process unit 35 shown in Fig. 9 is an example of generating the sound signals having eight directivities of D1 to D8 from the four omnidirectional microphones. The sound signals having the same directivities may be generated by the other configuration.

Meanwhile, the sound signals from the multi-channel sound synthesis unit 37 and the multi-channel sound process unit 35 and the wireless sound signal received from the wireless microphone device 20 are synthesized as the multi-channel signals having specific multi-channel standards. For example, an input sound signal is synthesized to five output channels including a C channel, an L channel, an R channel, a SL channel, and a SR channel. In addition, in a case of obtaining signals of 5.1 channel, as a sub-woofer channel (0.1 channel), for example, the output signal of any one of the microphones 35a to 35d or a signal obtained by synthesizing the output signals of the microphones 35a to 35d with a same ratio may be output.

Under the control of the multi-channel sound synthesis unit 37 and the control unit 39, the input sound signal is synthesized to a specific output channel with a predetermined level. In the present embodiment, the allocation of eight sound signals from the multi-channel sound process unit 35 to the output channel is changed depending on the zoom factor. Furthermore, the allocation of the wireless sound signal to the output channel is also changed depending on the zoom factor.

Hereinafter, the synthesis process control in the multi-channel sound synthesis unit 37 will be described in detail. For example, a zoom factor control range is divided into a wide-angle range, a telescope range, and a middle range sound synthesis states are controlled to be changed in the respective ranges.

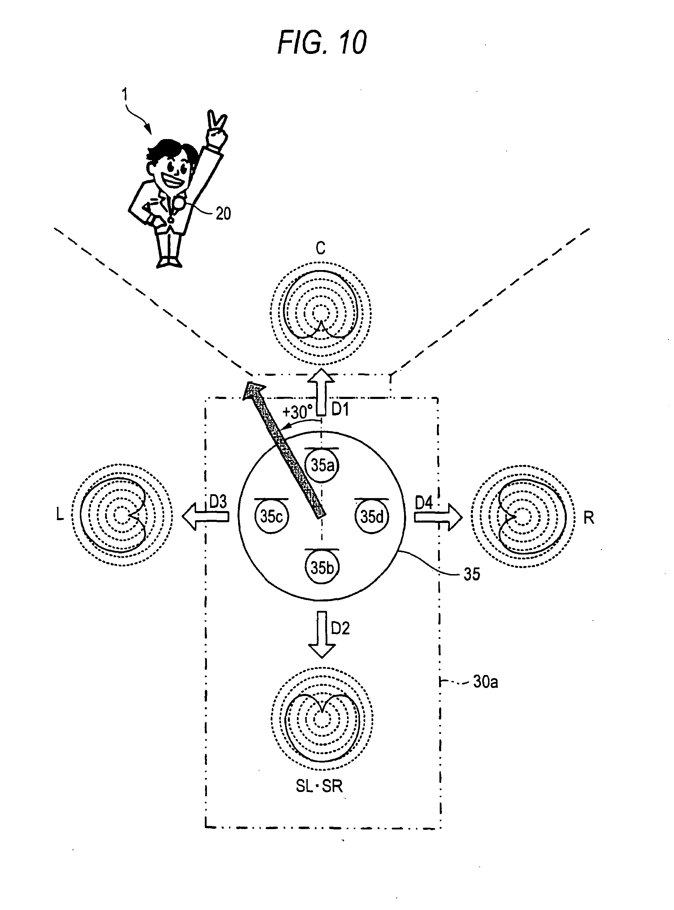

First, Fig. 10 shows the allocation of the output channel when the zoom factor is in the wide-angle range.

When the zoom factor is in the wide-angle range, among the sound signals generated by the multi-channel sound process unit 35, the sound signal having the directivity in the front direction D1 is synthesized to the C channel, the sound signal having the directivity in the left direction D3 is synthesized to the L channel, the sound signal having the directivity in the right direction D4 is synthesized to the R channel, and the sound signal having the directivity in the back direction D2 is synthesized to the SL channel and the SR channel.

Meanwhile, the wireless sound signal is synthesized to the output channel allocated with the sound signal having the directivity at an angle closest to that of the wireless sound signal, according to the direction information of the wireless microphone device 20. For example, when the angle of the front direction D1 is a reference angle (±0°), the left direction thereof is positive, and the right direction thereof is negative, the left direction D3 has +90°. When the person 1 having the wireless microphone device 20 stays at a position of +30°, the closest angle of the directivities of the sounds synthesized to the output channel is 0°. Accordingly, the sound signal having the directivity in this direction is synthesized to the C channel, and thus the wireless sound signal is also synthesized to the C channel.

In addition, in addition to selecting the output channel allocated with the sound signal having the directivity at the closest angle, the wireless sound signal may be synthesized to an adjacent output channel with a synthesis ratio according to a direction (angle) of the wireless microphone device 20. For example, in Fig. 10, the wireless sound signal from the position of +30° is synthesized to the C channel and the L channel such that the synthesis ratio between the channels is set to a ratio according to a relationship between the directivity corresponding to the output channel and the wireless microphone device 20. In this example, the synthesis level of the C channel is larger than that of the L channel. By this control, the sound from the wireless microphone device 20 can be more naturally reproduced.

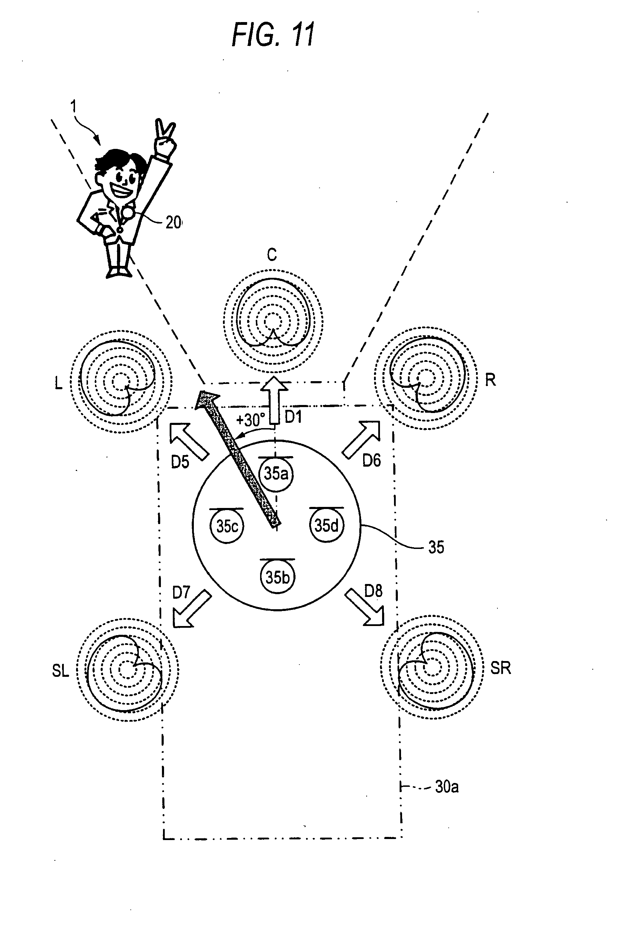

Fig. 11 shows the allocation of the output channel when a zoom factor is in the middle range.

When the zoom factor is the middle range, among the sound signals generated by the multi-channel sound process unit 35, the sound signal having the directivity in the front direction D1 is synthesized to the C channel, the sound signal having the directivity in the left front direction D5 is synthesized to the L channel, the sound signal having the directivity in the right front direction D6 is synthesized to the R channel, the sound signal having the directivity in the left back direction D7 is synthesized to the SL channel, and the sound signal having the directivity in the right back direction D8 is synthesized to the SR channel.

Meanwhile, similar to the wide-angle range, the wireless sound signal is synthesized to the output channel allocated with the sound signal having the directivity at an angle closest to that of the wireless sound signal, according to the direction information of the wireless microphone device 20. Since the directivities of the output channels are changed, the synthesis channels of the wireless sound signals are changed. When the wireless microphone device 20 exists at a position of +30°, the closest angle is the direction D5 of +45°. Accordingly, the sound signal having the directivity in this direction is synthesized to the L channel, and thus the wireless sound signal is also synthesized to the L channel.

In addition, similar to Fig. 10, the wireless sound signal is not synthesized to only the L channel. In other words, the wireless sound signal may be synthesized to the C channel and the L channel with an appropriate sound volume according to the direction of the wireless microphone device 20.

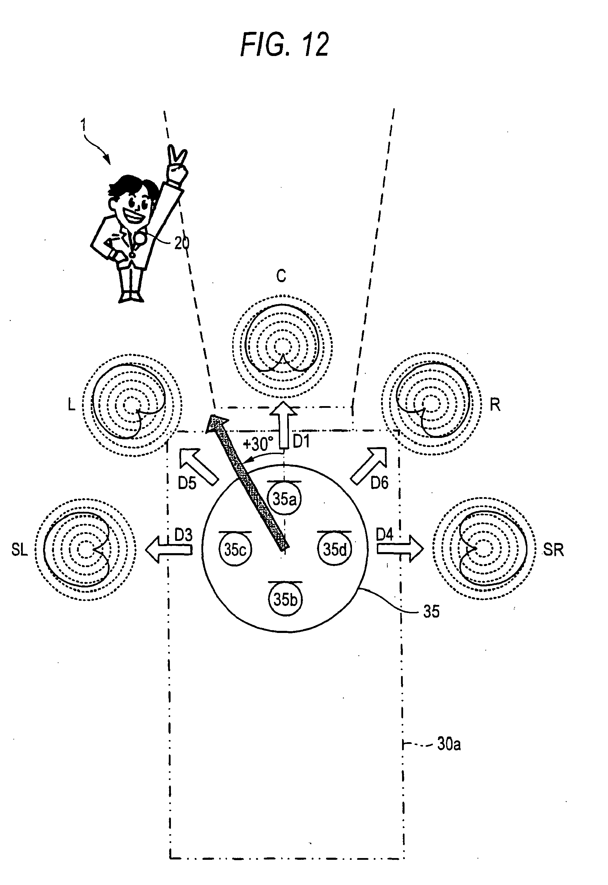

Fig. 12 shows the allocation of the output channel when a zoom factor is in the telescope range.

When the zoom factor is in the telescope range, among the sound signals generated by the multi-channel sound process unit 35, the sound signal having the directivity in the front direction D1 is synthesized to the C channel, the sound signal having the directivity in the left front direction D5 is synthesized to the L channel, the sound signal having the directivity in the right front direction D6 is synthesized to the R channel, the sound signal having the directivity in the left direction D3 is synthesized to the SL channel, and the sound signal having the directivity in the right direction D4 is synthesized to the SR channel.

Meanwhile, when the wireless microphone device 20 exists at a position of +30°, the closest angle is the direction D5 of +45°. Accordingly, the sound signal having the directivity in this direction is synthesized to the L channel, and thus the wireless sound signal is also synthesized to the L channel.

In addition, similar to Fig. 10 and Fig. 11, the wireless sound signal is not synthesized to only the L channel. In other words, the wireless sound signal may be synthesized to the C channel and the L channel with an appropriate sound volume ratio according to the direction of the wireless microphone device 20.

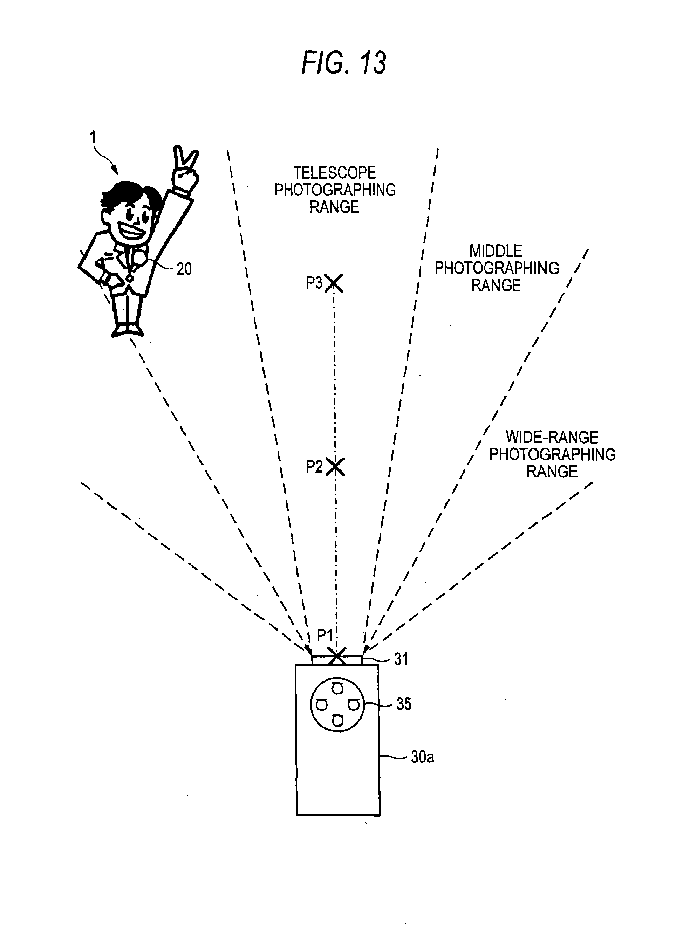

Fig. 13 shows a photographing range which is changed by a zoom operation of the video camera. Effect of the sound synthesis control will be described with reference to Fig. 13.

As shown in Fig. 13, for example, it is assumed that three points P1, P2, and P3 are located on a straight line in the front direction (0°) of the video camera 30a. Also, it is assumed that the point P1 is a photographing position of the video camera 30a, the point P3 is a position adjacent to the subject (person 1), and the point P2 is a middle point between the points P1 and P3.

First, when the sound signals having different directivities from the multi-channel sound process unit 35 are synthesized to the output channel and the zoom factor is in the wide-angle range as shown in Fig. 10, the sound at the photographing position of the video camera 30a, that is the point P1, are synthesized to the output channel having the directivity in a direction substantially equal to this direction, thereby generating a sound field at the position of P1.

In addition, when the zoom factor is in the telescope range as shown in Fig. 12, only the sound of the front side of the point P1 is synthesized to the output channel. Accordingly, the sound field can be pseudo-generated at the point P3 close to the subject. For example, when the subject is located at the position of the front direction (0°) and the zoom factor is set in the telescope range, the subject is displayed on the screen with a large size. Thus, the sound field in the vicinity of the subject is reproduced to increase the presence feeling.

Furthermore, when the zoom factor is in the middle range as shown in Fig. 11, the sound field is pseudo-generated at the point P2 between the point P1 and the Point P3. As such, when the directivity of the built-in microphone is changed depending on the zoom factor and the sound signal is synthesized to the output channel, the sound field can be reproduced according to the screen state and thus the presence feeling can increase.

Next, the synthesis control of the sound signal (wireless sound signal) from the wireless microphone device 20 will be described. When the zoom factor is in the wide-angle range as shown in Fig. 10, the wireless sound signal from the subject located at the position of ±0° (near the point P3) is synthesized to the C channel. In this state, when the subject is moved, for example, in the left direction and exceeds the position of +45°, the synthesis channel of the wireless sound signal is changed from the C channel to the L channel. Meanwhile, when the zoom factor is in the telescope range as shown in Fig. 12, if the subject is moved from ±0° in the left direction and exceeds the position of +22.5°, the synthesis channel of the wireless sound signal is changed from the C channel to the L channel.

In other words, when the subject located near the front side is moved in the left and right directions with the same speed, the wireless sound signal is moved from the C channel to the L channel (or R channel) in a short time as the zoom factor is close to the telescope range. Accordingly, when the multi-channel sound is reproduced, the higher the zoom factor, the faster the sound and the image of the subject are moved from the front side in the left and right directions. In addition, in a range where the angle from the position of the subject is large (for example, ±90° to ±180°), the higher the zoom factor, the slower the sound and the image of the subject are moved.

Next, a relationship between the sound state and the screen state will be described. As shown in Fig. 13, the photographing range of the camera block 31 is changed depending on the zoom factor. The telescope photographing range of the zoom factor is narrower than the wide-angle photographing range. The middle photographing range is between the wide-angle photographing range and the telescope photographing range.

Accordingly, when the subject is moved from the point of P3 at a predetermined speed in the left direction (or the right direction) and the zoom factor is in the wide-angle range, the subject can be captured on the screen for a long time. In addition, the sound and image of the subject are slowly moved from the front side in the left and right directions. Meanwhile, when the zoom factor is in the telescope range, the subject disappears on the screen in a shorter time, although the subject is moved at the same speed. In addition, the sound and the image of the subject are moved from the front side in the left and right directions in a short time.

By the synthesis control of the sound signal, when the zoom factor is in the wide-angle range, a method of making the sound of the subject audible can be matched to a method of making the subject adjacent to the video camera 30a visible. In contrast, when the zoom factor is in the telescope range, a method of making the subject adjacent to the video camera 30a visible can be matched to a method of making the sound from the subject audible. In other words, by the synthesis control of the wireless sound signal, similar to the synthesis control of the sound signal from the multi-channel sound process unit 35, when the zoom factor is in the wide-angle range, the method of making the sound of the subject located at the point P1 audible can be reproduced, and, when the zoom factor is in the telescope range, the method of making the sound of the subject located at the point P3 audible can be reproduced. Accordingly, it is possible to reproduce the effective sound field according to the screen state. Thus, the presence feeling can more increase by synergy between the synthesis control function of the sound signal from the multi-channel sound process unit 35 and the zoom function.

Next, a procedure for controlling the sound synthesis performed by the video camera 30a will be described.

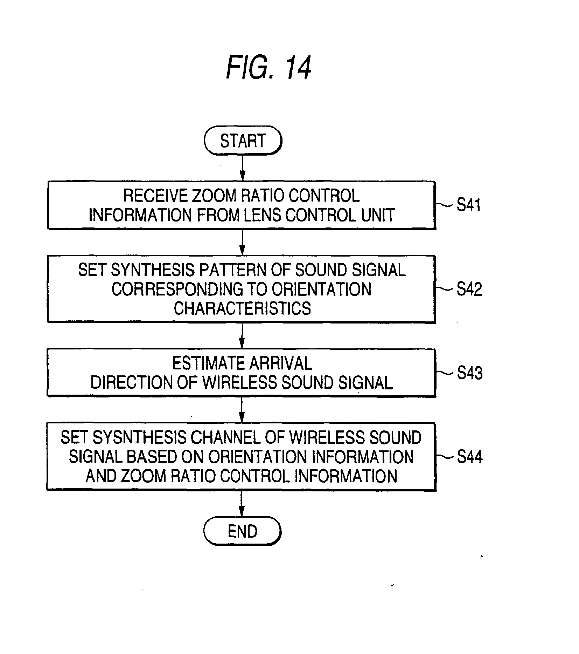

Fig. 14 is a flowchart showing a procedure for synthesizing the sound in the video camera related to the third embodiment of the invention.

In step S41, the control unit 39 receives zoom factor control information (or the zoom lens position information) from the lens control unit 33 as a state signal according to the zoom operation of the video camera 30a.

In step S42, the control unit 39 sets synthesis patterns of the sound signals having the different directivity from the multi-channel sound process unit 35 for the output channel to the multi-channel sound synthesis unit 37.

In the present embodiment, the control unit 39 determines whether a current zoom factor is in any one of the three zoom factor control ranges, using the zoom factor control information, reads the synthesis pattern corresponding to the control range, for example, from a read only memory (ROM) (not shown), and sets the synthesis pattern to the multi-channel sound synthesis unit 37. In the synthesis pattern, correspondence between the sound signals from the multi-channel sound process unit 35 and the output channels is described in each control range of the zoom factor.

In step S43, the control unit 39 estimates the arrival direction of the wireless sound signal, based on the intensity of the wave received from the wireless microphone device 20 through the wireless communication unit 36.

In the step S44, the control unit 39 decides and sets the output channel to which the wireless sound signal is synthesized to the multi-channel sound synthesis unit 37, based on the direction information of the estimated wireless sound signal and the zoom factor control information.

In the present embodiment, for example, the value and the range of the direction information and the output channel corresponding thereto may be stored in and read from the ROM with respect to each of the three zoom factor control ranges in step S44. In addition, from the allocation of the directivity on the current output channel and the direction information, the output channel or the synthesis ratio among the channels may be obtained by calculation.

By the above-described process, the multi-channel sound synthesis unit 37 synthesize the sound signal from the multi-channel sound process unit 35 and the wireless sound signal with a predetermined ratio and the record reproduction unit 38 records the sound signal with high presence feeling.

In addition, although, in the third embodiment, the zoom factor control range is divided into three ranges including the wide-angle range, the middle range, and the telescope range and the synthesis channel of the sound signal is changed depending on the ranges, the range may be more finely divided. Alternatively, the synthesis channel or the synthesis ratio may be sequentially changed depending on the zoom factor. By such controls, it is possible to more naturally reproduce the sound field with high presence feeling.

In addition to the control for changing the synthesis channel of the wireless sound signal depending on the zoom factor, a total synthesis amount may be also changed depending on the zoom factor. Similar to Fig. 6, the higher the zoom factor, the more the synthesis amount of the wireless sound signal. When the wireless sound signal is synthesized to a plurality of output channels, the total synthesis amount is changed, without changing the synthesis ratio among the output channels. Accordingly, it is possible to clearly hear the sound collected by the wireless microphone device 20. In addition, the more the subject on the screen is magnified, the more the sound volume of the subject. Thus, the presence feeling can more increase.

Furthermore, similar to Fig. 5 or Fig. 7, the distance from the wireless microphone device 20 may be estimated based on the intensity of the wave from the wireless microphone device 20 or the focal length of the camera block 31. The shorter the distance, the less the synthesis amount of the wireless sound signal. Accordingly, it is possible to more clearly hear the sound collected by the wireless microphone device 20, regardless of the distance to the subject having the wireless microphone device 20. In this case, when the wireless microphone device 20 becomes closer to the video camera 30a, the synthesis amount of the wireless sound signal is reduced. However, since the sound of the subject can be collected by the built-in microphone, it is possible to accurately reproduce the sound field.

In addition, the synthesis channel of the wireless sound signal may be constantly synthesized to any channel, without being changed depending on the zoom factor and the synthesis channel of the plural sound signals having different directivities according to the signal collected by the built-in microphone may be changed depending on the zoom factor. For example, when the subject having the wireless microphone device 20 is captured in the screen and photographed, it is possible to increase the presence feeling of the sound although the wireless sound signal is constantly synthesized to, for example, the C channel. In this case, the synthesis amount of the wireless sound signal may be changed depending on the distance from the wireless microphone device 20 estimated by the zoom factor, the wave intensity, or the focal length.

It should be understood by those skilled in the art that various modifications, combinations, sub-combinations and alterations may occur depending on design requirements and other factors insofar as they are within the scope of the appended claims or the equivalents thereof.

## Claims

1. An imaging device which collects sound, takes an image, and records the sound and the image on a recording medium, comprising:
a sound collecting unit collecting sound signals of a plurality of channels;
a wireless communication unit receiving a sound signal transmitted from an external sound collecting device by wireless; and
a sound synthesis unit synthesizing the sound signal received by the wireless communication unit to at least any one of channels of the sound signals collected by the sound collecting unit.

2. The imaging device according to Claim 1, wherein the sound synthesis unit synthesizes the sound signal received by the wireless communication unit to any one of the channels of the sound signals collected by the sound collecting unit with a predetermined synthesis ratio.

3. The imaging device according to Claim 1, further comprising a sound source direction estimating unit estimating the direction of the external sound collecting device,
wherein the sound synthesis unit decides a synthesis ratio among the channels or a channel to which the sound signal received by the wireless communication unit is synthesized, according to the direction estimated by the sound source direction estimating unit.

4. The imaging device according to Claim 3, wherein the wireless communication unit receives the sound signal by a directional variable antenna and the sound source direction estimating unit estimates the direction based on the intensity of the signal received through the directional variable antenna.

5. The imaging device according to Claim 1, further comprising a sound source position estimating unit estimating a distance to the external sound collecting device,
wherein the sound synthesis unit decides a total synthesis level when the sound signal received by the wireless communication unit is synthesized to any channel, according to the distance estimated by the sound source position estimating unit.

6. The imaging device according to Claim 5, wherein the sound source position estimating unit estimates the distance based on the intensity of the signal received by the wireless communication unit.

7. The imaging device according to Claim 5, further comprising a zoom mechanism magnifying the image of incident light from a subject,
wherein the sound source position estimating unit estimates the distance based on a zoom factor control value of the zoom mechanism.

8. The imaging device according to Claim 5, further comprising a focus mechanism focusing incident light from a subject onto an imaging surface,
wherein the sound source position estimating unit estimates the distance based on a control value of the focus mechanism.

9. The imaging device according to Claim 1, further comprising a zoom mechanism magnifying an image of incident light from a subject,
wherein the sound collecting unit converts sound signals collected by a plurality of microphones into sound signals having different directivities with respect to respective channels and outputs the sound signals having the different directivities, according to a zoom factor control value of the zoom mechanism.

10. The imaging device according to Claim 9,
wherein the sound collecting unit synthesizes the sound signals having the different directivities according to the sound signals collected by the plurality of microphones to a plurality of sound output channels with different synthesis ratios according to the zoom factor control value.

11. The imaging device according to Claim 9, further comprising a sound source direction estimating unit estimating the direction of the external sound collecting device,
wherein the sound synthesis unit decides a synthesis ratio among the channels or a channel to which the sound signal received by the wireless communication unit is synthesized, according to the direction estimated by the sound source direction estimating unit and the zoom factor control value of the zoom mechanism.

12. The imaging device according to Claim 11,
wherein the sound synthesis unit synthesizes the sound signal received by the wireless communication unit to a channel from which a sound signal having directivity in a direction closest to the direction estimated by the sound source direction estimating unit is output, among the channels from which the sound signals having different directivities are output by the sound collecting unit.

13. The imaging device according to Claim 11,
wherein the sound synthesis unit synthesizes the sound signal received by the wireless communication unit to the plurality of channels adjacent to a channel from which a sound signal having directivity in a direction closest to the direction estimated by the sound source direction estimating unit is output, among the channels from which the sound signals having different directivities are output by the sound collecting unit, with a ratio among the channels according to the estimated direction.

14. A sound record device which records a sound signal on a recording medium, comprising:
a sound receiving unit wire-receiving sound signals of a plurality of channels;
a wireless communication unit receiving a sound signal transmitted from an external sound collecting device by wireless; and
a sound synthesis unit synthesizing the sound signal received by the wireless communication unit to at least any one of the channels of the sound signals received by the sound receiving unit.

15. A sound record method which records a sound signal on a recording medium, comprising the steps of:
wire-receiving sound signals of a plurality of channels and receiving a sound signal transmitted from an external sound collecting device by wireless; and
synthesizing the wirelessly received sound signal to at least any one of channels of the wire-received sound signal and recording the synthesized signal on the recoding medium.
